# EUROPÄISCHE PATENTSCHRIFT

(11) **EP 0 857 130 B1**
(45) Veröffentlichungstag und Bekanntmachung des Hinweises auf die Patenterteilung: **19.03.2003**
(21) Anmeldenummer: 96934749.1
(22) Anmeldetag: 18.10.1996
(51) Int. Cl.: B60T 13/74, F16D 51/46

(54) **SELBSTVERSTÄRKENDE REIBUNGSBREMSE**
SERVO FRICTION BRAKE
SERVOFREIN A FRICTION

(30) Priorität: 19.10.1995 DE 19539012
(43) Veröffentlichungstag der Anmeldung: 12.08.1998
(60) Teilanmeldung: 02025983.4
(73) Patentinhaber: Continental Teves AG & Co. oHG, 60488 Frankfurt (DE)
(72) Erfinder: BILL, Karlheinz, D-63303 Dreieich (DE); DUSIL, Vladimir, D-64347 Griesheim (DE); LEBER, Matthias, D-64397 Modautal (DE)
(86) Internationale Anmeldenummer: EP9604540
(87) Internationale Veröffentlichungsnummer: WO97014594

(56) Entgegenhaltungen:
- GB-A- 1 403 742
- US-A- 4 250 981
- US-A- 4 627 519
- US-A- 5 036 960

## Beschreibung

Die Erfindung betrifft eine selbstverstärkende Reibungsbremse gemäß dem Oberbegriff des Patentanspruchs 1.

Eine derartige Reibungsbremse ist aus der US-A-4,250,981 bekannt. Das Besondere an der vorbekannten Reibungsbremse besteht darin, daß sie mit Mitteln versehen ist, die eine Anpassung des aufzubringenden Bremsmoments an den Beladungszustand ermöglichen. Dadurch wird erreicht, daß bei einer Erhöhung der Fahrzeugbeladung eine Erhöhung der auf die Beläge wirkenden Betätigungskraft durch eine Änderung des Bremsenkennwerts C*, d.h., des Verhältnisses zwischen der an der Reibfläche wirkenden Bremskraft und der am Bremsbelag wirkenden Betätigungskraft, erfolgt.

Aus der US-A-5,036,960 ist eine selbstverstärkende Reibungsbremse bzw. hydraulisch betätigbare Scheibenbremse bekannt, in deren Betrieb eine Regelung stattfindet, die einer Stabilisierung des Verhältnisses zwischen einem Verstärkungsdruck und dem von einem Hauptbremszylinder erzeugten hydraulischen Druck dient. Der Bremsenkennwert C* ist durch die konstruktive Auslegung der entsprechenden druckbeaufschlagten Flächen fest vorgegeben.

Als weniger vorteilhaft wird bei den vorbekannten Reibungsbremsen empfunden, daß der vom Reibwert der im Reibeingriff stehenden Elemente (Bremsbelag, Reibfläche) abhängige Bremsenkennwert C* nicht frei eingestellt werden kann, so daß die bekannten Bremsen eine hohe Reibwertempfindlichkeit aufweist.

Es ist daher Aufgabe der vorliegenden Erfindung, Maßnahmen vorzuschlagen, die eine wesentliche Verringerung der Reibwertempfindlichkeit ermöglichen. Gleichzeitig soll eine hohe Selbstverstärkung, insbesondere in der Nähe der Blockiergrenze, realisiert werden können.

Diese Aufgabe wird erfindungsgemäß dadurch gelöst, daß die Wirkung der vom Verstellmechanismus aufgebrachten Kraft bzw. Verstellkraft auf den zentralen Kraftabstützpunkt des Reibbelags senkrecht zu einer am Reibbelag wirkenden Normalkraft auf einer geradlinigen Bahn erfolgt.

Vorteilhafte Weiterbildungen des Erfindungsgegenstandes sind den Unteransprüchen 2 bis 23 zu entnehmen.

Weitere Einzelheiten, Merkmale und Vorteile der Erfindung gehen aus der nachfolgenden Beschreibung eines Ausführungsbeispiels unter Bezugnahme auf die beiliegende Zeichnung hervor, in der für einander entsprechende Einzelteile gleiche Bezugszeichen verwendet werden. In der Zeichnung zeigt:
- Fig. 1: eine erfindungsgemäß ausgeführte Reibungs- bzw. Duplexbremse;
- Fig. 2: den Schnitt "C - C" nach Fig. 1 in größerem Maßstab; und
- Fig. 3: eine schematische Darstellung des Funktionsprinzips der in Fig. 1 und 2 gezeigten Duplexbremse.

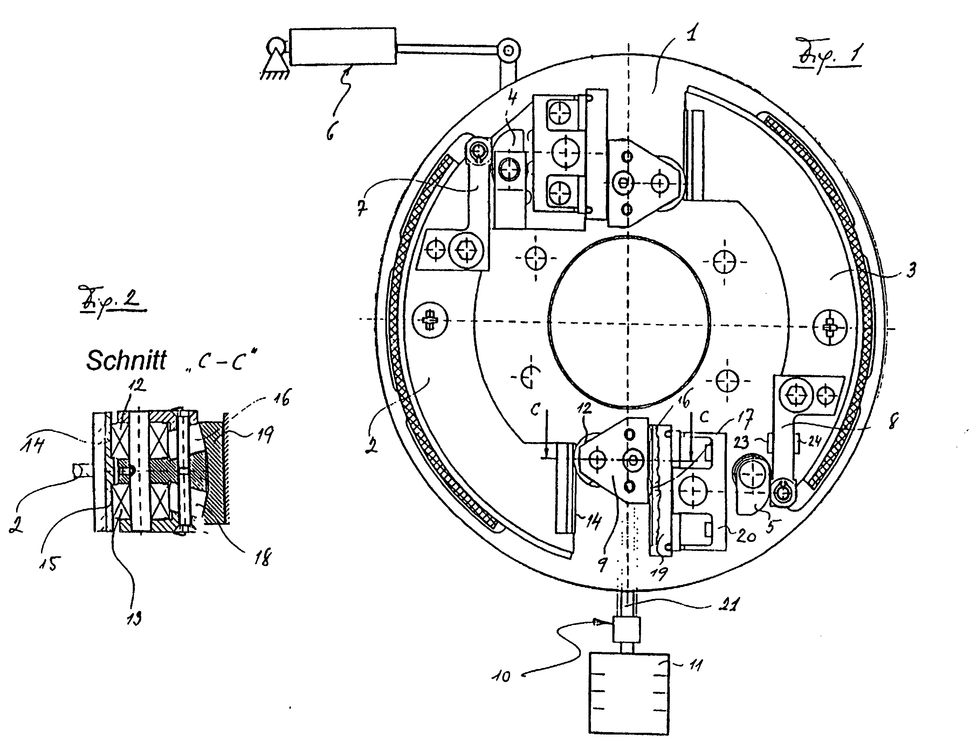

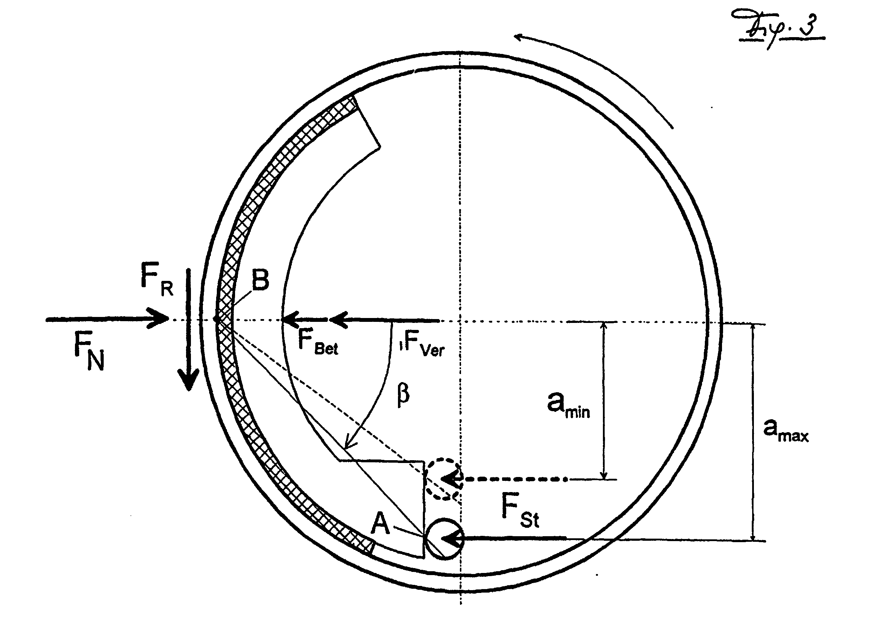

Die in Fig. 1 dargestellte Trommel- bzw. Duplexbremse weist einen Bremsträger 1 auf, auf dem zwei mit Bremsbelägen versehene Bremsbacken 2, 3 radial gegenüberliegend angeordnet sind, die über drehbar gelagerte Spannocken 4, 5 mittels einer Betätigungseinrichtung 6 betätigbar bzw. mit einer nicht gezeigten Bremstrommel in Eingriff brinbar sind. Die Spannocken 4, 5 wirken dabei über je ein mit der Bremsbacke 2, 3 verschraubtes Kraftübertragungsteil 7, 8 auf ein Ende der Bremsbacke 2, 3, deren anderes Ende über einen zentralen Kraftabstützpunkt A (s. Fig. 3) am Bremsträger 1 abgestützt ist. Das Kraftübertragungsteil 7,8 ist dabei vorzugsweise mit Kraftmeßelementen, beispielsweise Dehnungsmeßstreifen, versehen, die am Kraftübertragungsteil 8 schematisch angedeutet und mit den Bezugszeichen 23,24 versehen sind. Der Kraftabstützpunkt A ist bei der gezeigten Ausführung an einem vorzugsweise radial verstellbaren Schlitten 9 eines Verstellmechanismus gebildet, der das Bezugszeichen 10 trägt. Der Schlitten 9 wird vorzugweise unter Zwischenschaltung eines Getriebes, beispielsweise eines lediglich schematisch angedeuteten Kugelgewindetriebs 21, durch einen elektrischen Schrittmotor 11 angetrieben und weist in Richtung seiner Hochachse zwei untereinander angeordnete, drehbar gelagerte Stützrollen 12, 13 auf, die mit zwei an der Bremsbacke 2 entsprechend ausgebildeten Laufbahnen 14, 15 zusammenwirken. Auf seiner der Bremsbacke 2, 3 abgewandten Seite ist der Schlitten 9 mit in Richtung seiner Hochachse untereinander angeordneten Rollenpaaren 16, 17 bzw. 18, - versehen, die mit einer vorzugsweise prismatisch ausgebildeten Führungsbahn 19 zusammenwirken, die mit dem Bremsträger 1 fest verschraubt ist. An der Führungsbahn 19 stützt sich eine Sensoreinrichtung 20 ab, die eine Ermittlung der zwischen dem Reibbelag 2 und der nicht gezeigten Bremstrommel wirkenden Reibkraft F_{R} (Fig. 3) ermöglicht.

Wie Fig. 3 zu entnehmen ist, kann bei der Ansteuerung des Schrittmotors 11 der durch die Stützrollen 12, 13 (Fig. 1, 2) gebildete Kraftabstützpunkt A mit der Stützkraft F_{St} in der Zeichnung von aₘₐₓ bis aₘᵢₙ verstellt werden, so daß eine Änderung des Winkels zwischen der Verbindungslinie AB des zentralen Kraftangriffspunktes B zwischen Reibbelag 2 und der lediglich angedeuteten Bremstrommel 22 mit dem zentralen, durch die Stützrollen 12, 13 gebildeten Kraftabstütztpunkt A der Bremsbacke 2 einerseits und der Richtung der an der Bremsbacke 2 wirkenden Normalkraft F_{N} andererseits stattfindet. Die Normalkraft F_{N} setzt sich zusammen aus einer im Kraftangriffspunkt B wirkenden Betätigungskraftkomponente F_{Bet} sowie einer Verstärkungskraft F_{Ver}, die aus der Selbstverstärkung resultiert.

## Patentansprüche

1. Selbstverstärkende Reibungsbremse mit einem Träger (1), mindestens einem sich am Träger (1) abstützenden, mit mindestens einer Reibfläche (22) zusammenwirkenden Reibbelag (2,3), mit mindestens einer Einrichtung (6) zur Betätigung des Reibbelags(2,3), sowie mit Mitteln (9,10,11,12,14,21), die während des Betriebs der Bremse Änderungen der Selbstverstärkung ermöglichen und die durch einen Verstellmechanismus (10) gebildet sind, der Änderungen des Winkels (β) zwischen der Verbindungslinie (AB) des zentralen Kraftangriffspunktes (B) zwischen Reibbelag (2) und Reibfläche (22) mit zentralem Kraftabstützpunkt (A) des Reibbelags (2) einerseits und der Richtung einer am Reibbelag (2) wirkenden Normalkraft (F_{N}) andererseits ermöglicht, **dadurch gekennzeichnet, daß** die Wirkung der vom Verstellmechanismus (10) aufgebrachten Kraft (Verstellkraft F_{St}) auf den zentralen Kraftabstützpunkt (A) des Reibbelags (2) senkrecht zu der am Reibbelag (2) wirkenden Normalkraft (F_{N}) auf einer geradlinigen Bahn erfolgt.

2. Reibungsbremse nach Anspruch 1 **dadurch gekennzeichnet, daß** die Reibungsbremse als eine Trommelbremse ausgebildet ist.

3. Reibungsbremse nach Anspruch 2 **dadurch gekennzeichnet, daß** die Reibungsbremse als eine Servobremse ausgebildet ist.

4. Reibungsbremse nach Anspruch 2 **dadurch gekennzeichnet, daß** die Reibungsbremse als eine Duo-Servobremse ausgebildet ist.

5. Reibungsbremse nach Anspruch 2 **dadurch gekennzeichnet, daß** die Reibungsbremse als eine Simplexbremse ausgebildet ist.

6. Reibungsbremse nach Anspruch 2 **dadurch gekennzeichnet, daß** die Reibungsbremse als eine Duo-Duplex-Bremse ausgebildet ist.

7. Reibungsbremse nach Anspruch 2 **dadurch gekennzeichnet, daß** die Reibungsbremse als eine Duplex-Bremse ausgebildet ist.

8. Reibungsbremse nach Anspruch 7 **dadurch gekennzeichnet, daß** die Änderungen des Winkels (β) durch Verstellen des zentralen Kraftabstützpunktes (A) des Reibbelags (2) vorgenommen werden.

9. Reibungsbremse nach Anspruch 8 **dadurch gekennzeichnet, daß** der Verstellmechanismus (10) durch einen mittels eines Antriebs (11,21) verstellbaren Schlitten (9) gebildet ist, der den zentralen Kraftabstütztpunkt (A) darstellt.

10. Reibungsbremse nach Anspruch 9 **dadurch gekennzeichnet, daß** der Antrieb durch einen pneumatischen Aktor gebildet ist.

11. Reibungsbremse nach Anspruch 9 **dadurch gekennzeichnet, daß** der Antrieb durch einen hydraulischen Aktor gebildet ist.

12. Reibungsbremse nach Anspruch 9 **dadurch gekennzeichnet, daß** der Antrieb durch einen elektrischen Aktor (11,21) gebildet ist.

13. Reibungsbremse nach Anspruch 12 **dadurch gekennzeichnet, daß** der Aktor durch einen Schrittmotor (11) mit nachgeschaltetem Getriebe (21) gebildet ist.

14. Reibungsbremse nach Anspruch 12 **dadurch gekennzeichnet, daß** der Aktor durch einen Servomotor mit nachgeschaltetem Getriebe gebildet ist.

15. Reibungsbremse nach Anspruch 12 **dadurch gekennzeichnet, daß** der Aktor durch einen Linearmotor gebildet ist.

16. Reibungsbremse nach einem der Ansprüche 12 bis 14 **dadurch gekennzeichnet, daß** das Getriebe als ein Gewindetrieb ausgebildet ist.

17. Reibungsbremse nach einem der Ansprüche 12 bis 14, **dadurch gekennzeichnet, daß** das Getriebe als ein Seiltrieb ausgebildet ist.

18. Reibungsbremse nach einem der Ansprüche 12 bis 14, **dadurch gekennzeichnet, daß** das Getriebe als ein Kurbeltrieb ausgebildet ist.

19. Reibungsbremse nach einem der Ansprüche 12 bis 14, **dadurch gekennzeichnet, daß** das Getriebe als eine Kombination Zahnstange/Ritzel ausgebildet ist.

20. Reibungsbremse nach Anspruch 7 und einem der Ansprüche 13 bis 19, **dadurch gekennzeichnet, daß** der zentrale Kraftabstützpunkt (A) durch mindestens eine im Schlitten (9) drehbar gelagerte Stützrolle (12,13) gebildet ist, die mit einer am Reibbelag (2) ausgebildeten Laufbahn (14,15) zusammenwirkt.

21. Reibungsbremse nach Anspruch 7 und einem der Ansprüche 13 bis 20, **dadurch gekennzeichnet, daß** der Schlitten (9) auf seiner dem Reibbelag (2) abgewandten Seite mindestens zwei Abstützrollen (16,17,18,-) aufweist, die mit einer am Träger (1) fest angeordneten Führungsbahn (19) zusammenwirken.

22. Reibungsbremse nach Anspruch 21 **dadurch gekennzeichnet, daß** die Führungsbahn (19) prismatisch ausgebildet ist.

23. Reibungsbremse nach einem der vorhergehenden Ansprüche **dadurch gekennzeichnet, daß** Mittel (7,20) vorgesehen sind, die eine Ermittlung der senkrecht auf den Reibbelag (2) wirkenden Betätigungskraftkomponente sowie der zwischen Reibbelag (2) und Reibfläche (22) wirkenden Reibkraft (F_{R}) ermöglichen.

## Claims

1. Servo friction brake including a carrier (1), at least one friction lining (2, 3) supported on the carrier (1) and interacting with at least one friction surface (22), at least one device (6) for actuating the friction lining (2, 3), as well as means (9, 10, 11, 12, 14, 21) which permit varying the servo effect during operation of the brake and are configured as an adjusting mechanism (10) that allows variations of the angle (β) between the connecting line (AB) of the central point of force application (B) between the friction lining (2) and the friction surface (22) with a central force support point (A) of the friction lining (2), on the one hand, and the direction of a normal force (F_{N}) acting on the friction lining (2), on the other hand, **characterized in that** the effect of the force (readjusting force F_{St}) generated by the adjusting mechanism (10) on the central force support point (A) of the friction lining (2) occurs perpendicular to the normal force (F_{N}) acting on the friction lining (2) on a straight-line course.

2. Friction brake as claimed in claim 1,
**characterized in that** the friction brake is configured as a drum brake.

3. Friction brake as claimed in claim 2,
**characterized in that** the friction brake is configured as a servo brake.

4. Friction brake as claimed in claim 2,
**characterized in that** the friction brake is configured as a duo servo brake.

5. Friction brake as claimed in claim 2,
**characterized in that** the friction brake is configured as a simplex brake.

6. Friction brake as claimed in claim 2,
**characterized in that** the friction brake is configured as a duo duplex brake.

7. Friction brake as claimed in claim 2,
**characterized in that** the friction brake is configured as a duplex brake.

8. Friction brake as claimed in claim 7,
**characterized in that** the variations of the angle (β) are made by adjusting the central force support point (A) of the friction lining (2).

9. Friction brake as claimed in claim 8,
**characterized in that** the adjusting mechanism (10) is provided by a sliding carriage (9) which is adjustable by a drive (11, 21) and represents the central force support point (A).

10. Friction brake as claimed in claim 9,
**characterized in that** the drive is a pneumatic actor.

11. Friction brake as claimed in claim 9,
**characterized in that** the drive is a hydraulic actor.

12. Friction brake as claimed in claim 9,
**characterized in that** the drive is an electric actor (11, 21).

13. Friction brake as claimed in claim 12,
**characterized in that** the actor is a stepped motor (11) with a subsequent gear unit (21).

14. Friction brake as claimed in claim 12,
**characterized in that** the actor is a servo motor with a subsequent gear unit.

15. Friction brake as claimed in claim 12,
**characterized in that** the actor is a linear motor.

16. Friction brake as claimed in any one of claims 12 to 14,
**characterized in that** the gear unit is a thread drive assembly.

17. Friction brake as claimed in any one of claims 12 to 14,
**characterized in that** the gear unit is a rope drive.

18. Friction brake as claimed in any one of claims 12 to 14,
**characterized in that** the gear is a crank gear.

19. Friction brake as claimed in any one of claims 12 to 14,
**characterized in that** the gear is a rack-and-pinion gear combination.

20. Friction brake as claimed in claim 7 and any one of claims 13 to 19,
**characterized in that** the central force support point (A) is provided by at least one supporting roller (12, 13) pivoted in the sliding carriage (9) and interacting with a running surface (14, 15) on the friction lining (2).

21. Friction brake as claimed in claim 7 and any one of claims 13 to 20,
**characterized in that** the sliding carriage (9) includes at least two supporting rollers (16, 17, 18, -) on its side remote from the friction lining (2) which interact with a guideway (19) rigidly arranged on the carrier (1).

22. Friction brake as claimed in claim 21,
**characterized in that** the guideway (19) has a prismatic design.

23. Friction brake as claimed in any one of the preceding claims,
**characterized in that** means (7, 20) are provided which permit determining the actuating force component which acts vertically on the friction lining (2) and the friction force (F_{R}) which acts between the friction lining (2) and the friction surface (22).

## Revendications

1. Frein à friction à auto-amplification comportant un support (1), au moins une garniture de friction (2, 3) prenant appui sur le support (1) et coopérant avec au moins une surface de friction (22), comportant au moins un dispositif (6) pour actionner la garniture de friction (2, 3), ainsi que des moyens (9, 10, 11, 12, 14, 21) qui permettent des variations de l'auto-amplification pendant le fonctionnement du frein, et qui sont constitués par un mécanisme de réglage (10) qui autorise des variations de l'angle (β) entre la ligne de liaison (AB) du point central (B) d'action de la force entre la garniture de friction (2) et la surface de friction (22) avec point central d'appui de la force (A) de la garniture de friction (2) d'une part et la direction d'une force normale (F_{N}) agissant sur la garniture de friction (2) d'autre part, **caractérisé en ce que** l'action de la force (force de réglage F_{ST}) appliquée par le mécanisme de réglage (10) sur le point central d'appui de la force (A) de la garniture de friction (2) s'effectue perpendiculairement à la force normale (F_{N}) agissant sur la garniture de friction (2), sur une trajectoire rectiligne.

2. Frein à friction selon la revendication 1, **caractérisé en ce que** le frein à friction est réalisé sous la forme d'un frein à tambour.

3. Frein à friction selon la revendication 2, **caractérisé en ce que** le frein à friction est réalisé en tant que servofrein.

4. Frein à friction selon la revendication 2, **caractérisé en ce que** le frein à friction est réalisé en tant que servofrein duo.

5. Frein à friction selon la revendication 2, **caractérisé en ce que** le frein à friction est réalisé en tant que frein simple.

6. Frein à friction selon la revendication 2, **caractérisé en ce que** le frein à friction est réalisé en tant que frein duplex duo.

7. Frein à friction selon la revendication 2, **caractérisé en ce que** le frein à friction est réalisé en tant que frein duplex.

8. Frein à friction selon la revendication 7, **caractérisé en ce que** les variations de l'angle (β) sont obtenues par réglage du point central d'appui de la force (A) de la garniture de friction (2).

9. Frein à friction selon la revendication 8, **caractérisé en ce que** le mécanisme de réglage (10) est constitué par un chariot (9) déplaçable au moyen d'un dispositif d'entraînement (11, 21) et qui constitue le point central d'appui de la force (A).

10. Frein à friction selon la revendication 9, **caractérisé en ce que** le dispositif d'entraînement est constitué par un actionneur pneumatique.

11. Frein à friction selon la revendication 9, **caractérisé en ce que** le dispositif d'entraînement est constitué par un actionneur hydraulique.

12. Frein à friction selon la revendication 9, **caractérisé en ce que** le disposition d'entraînement est constitué par un actionneur électrique (11, 21).

13. Frein à friction selon la revendication 12, **caractérisé en ce que** l'actionneur est constitué par un moteur pas à pas (11) avec transmission (21) montée en aval.

14. Frein à friction selon la revendication 12, **caractérisé en ce que** l'actionneur est constitué par un servomoteur avec transmission montée en aval.

15. Frein à friction selon la revendication 12, **caractérisé en ce que** l'actionneur est constitué par un moteur linéaire.

16. Frein à friction selon l'une des revendications 12 à 14, **caractérisé en ce que** la transmission est réalisée sous la forme d'un mécanisme fileté.

17. Frein à friction selon l'une des revendications 12 à 14, **caractérisé en ce que** la transmission est réalisée sous la forme d'un mécanisme à câble.

18. Frein à friction selon l'une des revendications 12 à 14, **caractérisé en ce que** la transmission est réalisée sous la forme d'un mécanisme à manivelle.

19. Frein à friction selon l'une des revendications 12 à 14, **caractérisé en ce que** la transmission est réalisée sous la forme d'une combinaison crémaillère/pignon.

20. Frein à friction selon la revendication 7 et l'une des revendications 13 à 19, **caractérisé en ce que** le point central d'appui de la force (A) est constitué par au moins un galet d'appui (12, 13) monté tournant dans le chariot (9) et qui coopère avec une voie de roulement (14, 15) réalisée sur la garniture de friction (2).

21. Frein à friction selon la revendication 7 et l'une des revendications 13 à 20, **caractérisé en ce que** le chariot (9) comporte, sur son côté tourné à l'opposé de la garniture de friction (2), au moins deux galets d'appui (16, 17, 18, -) qui coopèrent avec une voie de guidage (19) disposée fixement sur le support (1).

22. Frein à friction selon la revendication 21, **caractérisé en ce que** la voie de guidage (19) est prismatique.

23. Frein à friction selon l'une des revendications précédentes, **caractérisé en ce que** sont prévus des moyens (7, 20) qui permettent de déterminer la composante de la force d'actionnement agissant perpendiculairement sur la garniture de friction (2) ainsi que la force de friction (F_{R}) agissant entre la garniture de friction (2) et la surface de friction (22).
